# EUROPÄISCHE PATENTSCHRIFT

(11) **EP 3 169 589 B1**
(45) Veröffentlichungstag und Bekanntmachung des Hinweises auf die Patenterteilung: **09.09.2020**
(21) Anmeldenummer: 15719641.1
(22) Anmeldetag: 17.04.2015
(51) Int. Cl.: B64F 1/36

(54) **VORRICHTUNG, SCHALTER UND VERFAHREN ZUR AUFGABE VON GEPÄCKSTÜCKEN**
DEVICE, COUNTER AND METHOD FOR CHECKING IN BAGAGE
DISPOSITIF, GUICHET ET PROCÉDÉ DE DEPOSE DES BAGAGES

(30) Priorität: 16.07.2014 DE 102014110011
(43) Veröffentlichungstag der Anmeldung: 24.05.2017
(73) Patentinhaber: Fraport AG Frankfurt Airport Services Worldwide, 60547 Frankfurt am Main (DE)
(72) Erfinder: MÜLLER, Markus, 63654 Büdingen (DE); BLANCO, Juan, 61137 Schöneck (DE)
(74) Vertreter: Prinz & Partner mbB
(86) Internationale Anmeldenummer: PCT/EP2015/058392
(87) Internationale Veröffentlichungsnummer: WO 2016/008604

(56) Entgegenhaltungen:
- EP-A1- 0 742 163
- WO-A1-2012/099461
- DE-A1-102012 013 247
- FR-A1- 2 966 139
- US-A1- 2010 018 839

## Beschreibung

Die Erfindung betrifft eine Vorrichtung zur Aufgabe von Gepäckstücken von Passagieren, insbesondere zur Verwendung an einem Flughafen. Die Erfindung betrifft ferner einen Gepäckaufgabeschalter, insbesondere einen Self-Service-Schalter, in den eine solche Vorrichtung integriert ist. Darüber hinaus betrifft die Erfindung ein Verfahren zur Aufgabe eines Gepäckstücks eines Passagiers, insbesondere an einem Flughafen, unter Verwendung einer solchen Vorrichtung.

Ein herkömmlicher Check-in-Schalter an einem Flughafen ist eine mit Personal besetzte Abfertigungseinrichtung, die dazu dient, die Identität des Passagiers zu überprüfen und mit den Daten im Reservierungssystem der jeweiligen Fluggesellschaft abzugleichen sowie den Flugschein (Ticket) einzusehen. Der Passagier kann dort auch sein Reisegepäck aufgeben. Der Passagier erhält am Check-in-Schalter eine Bordkarte, die ihn zur Beförderung an Bord der gebuchten Maschine berechtigt. Außerdem wird für jedes aufgegebene Gepäckstück ein Gepäckanhänger ("bag tag") ausgegeben und am jeweiligen Gepäckstück befestigt, bevor es in eine Gepäcksortieranlage eingespeist wird. Der Passagier erhält einen oder mehrere Gepäckbelege mit Informationen zu seinem aufgegebenen Gepäck.

Abgesehen von der Möglichkeit, über das Internet einzuchecken (Online-/Web-Check-in) werden an Flughäfen vermehrt Check-in-Automaten eingesetzt, um Kosten für die Fluglinien und Zeit für die Passagiere zu sparen. Solche Automaten ermöglichen es einem Passagier, die Sitzplatzvergabe selbst vorzunehmen und eventuell Angaben über Gepäckstücke zu machen. Voraussetzung für diese Selbstbedienung sind meist Vielfliegerkarten oder elektronische Tickets. Für die Aufgabe seines Reisegepäcks muss ein Passagier aber dennoch zu einem normalen Check-in-Schalter oder einem speziellen Schalter gehen, der nur für die Gepäckannahme eingerichtet ist.

Inzwischen bieten immer mehr Flughäfen bzw. Fluggesellschaften den Passagieren die Möglichkeit, ihr Gepäck selbstständig, d. h. ohne Schalter-Personal, an entsprechenden Gepäckaufgabevorrichtungen aufzugeben. Diese Selbstbedienungsautomaten gibt es von verschiedenen Anbietern in unterschiedlichen Ausführungen und mit unterschiedlichen Funktionalitäten. Allgemein sind diese Automaten aufgrund der besonderen Anforderungen sehr aufwendig in der Herstellung und Wartung, da sie manipulationssicher sein und zuverlässig funktionieren müssen.

Ungeachtet der verschiedenen Lösungsansätze der jeweiligen Anbieter basieren die Selbstbedienungsautomaten technisch alle auf dem gleichen Konzept mit folgenden Anforderungen: a) Das Gepäckstück muss über eine Gepäckbandführung positioniert und ausgerichtet in die Gepäckförderanlage abgeführt werden; und b) je nach Vorrichtungstyp (z. B. Behältertechnik) müssen vorher noch das Gewicht und die Maße des Gepäckstücks geprüft werden (Konturenkontrolle).

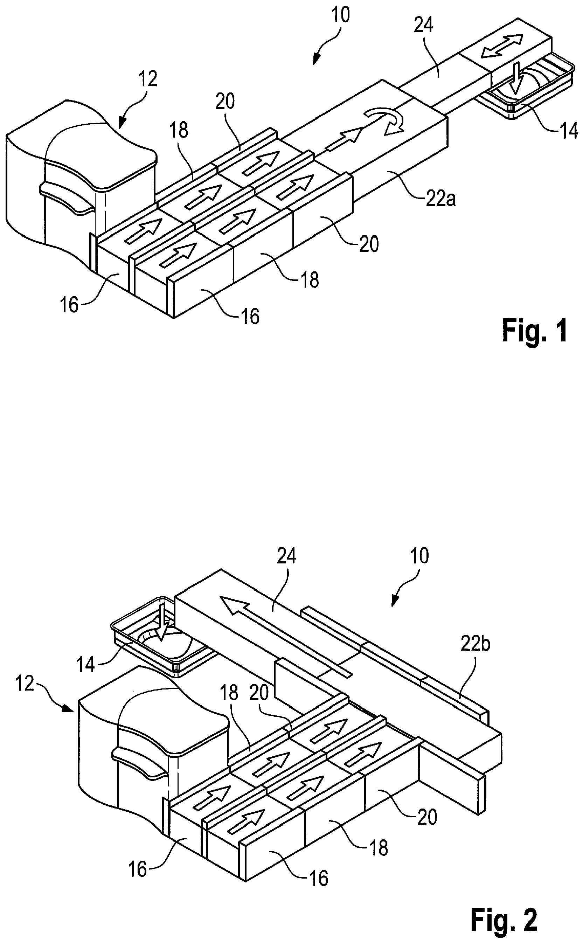

Die Figuren 1 und 2 zeigen beispielhaft zwei Förderbandsysteme 10 an einem Flughafen nach dem Stand der Technik, die zur Überführung aufgegebener Gepäckstücke von einem Check-in-Schalter 12 zur Beladung eines Transportbehälters 14 der Gepäckförderanlage vorgesehen sind. Dabei bezeichnet 16 ein Wiegeband, auf dem jedes Gepäckstück gewogen wird, 18 ein Labelband, auf dem das Gepäckstück mit einem Gepäckanhänger versehen wird, 20 ein Zufuhrband, 22a ein Ausrichtband, 22b ein Takeawayband und 24 ein Verladeband.

Aus der FR 2 966 139 A1 ist eine Vorrichtung zur Aufgabe von Gepäckstücken von Passagieren mit den Merkmalen des Oberbegriffs des Anspruchs 1 bekannt. Ein Gepäckstück wird zu einem stromabwärts gelegenen Sammelband mit einem Behälter gefördert, dessen Abmessungen einer vorgegebenen erlaubten Größe von Gepäckstücken entspricht. Der Behälter besteht aus einem mobilen Wagen mit einer Aufnahmeplatte, auf der das Gepäckstück abgelegt wird, und einem senkrechten Förderband, an das sich das Gepäckstück anlehnt, sowie zwei Flanken und einer stirnseitigen Bande, die mit einem Chassis der Vorrichtung verbunden sind. Der mobile Wagen wird von einem Motor über eine Kippkinematik gedreht und angehoben, um das Gepäckstück von einer anfänglichen, im Wesentlichen vertikalen Platzierungsposition in eine horizontale Transferposition zum Sammelband zu kippen. Eine Schließvorrichtung ist dazu vorgesehen, den Behälter zu schließen und so das Gepäck während der Drehung des mobilen Wagens zu isolieren.

Die US 2010/0018839 A1 zeigt ebenfalls eine Gepäckaufgabevorrichtung mit den Merkmalen des Oberbegriffs des Anspruchs 1. Die Vorrichtung umfasst einen mit einer Schließanordnung versehenen Aufnahmeraum mit einer Einführöffnung und einer Ausgabeöffnung und eine Fördereinheit zum Transportieren des Gepäckstücks aus dem Aufnahmeraum durch die Ausgabeöffnung. Die Schließanordnung umfasst einen Schließmechanismus sowie eine Steuerschaltung, die so eingerichtet ist, dass sie die Ausgabeöffnung vor dem Öffnen der Einführöffnung zum Einführen des Gepäckstücks in den Aufnahmeraum schließt und die Einführöffnung vor dem Öffnen der Ausgabeöffnung zum Ausgeben des Gepäckstücks aus dem Aufnahmeraum schließt. Die Fördereinheit umfasst ein erstes Förderelement und ein zweites Förderelement, die hintereinander platziert und so angeordnet sind, dass sie zwischen einer ersten Position, in der sich das erste Förderelement in einer horizontalen Position und das zweite Förderelement in einer vertikalen Position befindet, und einer zweiten Position neigbar sind, in der sich das erste Förderelement in einer vertikalen Position und das zweite Förderelement in einer horizontalen Position befindet, wobei das Neigen der beiden Förderelemente das Gepäckstück auf eine Seite zwingt.

Aufgabe der Erfindung ist es, eine platzsparende Vorrichtung zur automatisierten Gepäckaufgabe zu schaffen, die sicher und zuverlässig arbeitet und unabhängig von der Fördertechnik der Gepäckförderanlage ist, die die Gepäckstücke von der Gepäckaufgabevorrichtung übernimmt, bzw. an die Vorgaben einer konkreten Gepäckförderanlage anpassbar ist.

Gelöst wird diese Aufgabe durch eine Vorrichtung zur Aufgabe von Gepäckstücken von Passagieren mit den Merkmalen des Anspruchs 1. Vorteilhafte und zweckmäßige Ausgestaltungen der erfindungsgemäßen Vorrichtung sind in den Unteransprüchen angegeben.

Die Erfindung schafft schließlich auch ein Verfahren zur Aufgabe eines Gepäckstücks eines Passagiers nach Anspruch 7.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
- Figur 1 ein erstes Förderbandsystem nach dem Stand der Technik;
- Figur 2 ein zweites Förderbandsystem nach dem Stand der Technik;
- Figur 3 zwei in einen Self-Service-Schalter integrierte nichterfindungsgemäße Vorrichtungen zur Gepäckaufgabe nach einer ersten Ausführungsform;
- Figur 4 eine weitere Ansicht der nicht-erfindungsgemäßen Vorrichtungen aus Figur 3;
- Figur 5 eine Rückansicht des Self-Service-Schalters mit den integrierten nicht-erfindungsgemäßen Vorrichtungen aus Figur 3;
- Figur 6 das Transportsystem der nicht-erfindungsgemäßen Vorrichtungen in der Ansicht von Figur 5;
- Figur 7 einen Teil des Entriegelungsmechanismus der nicht-erfindungsgemäßen Vorrichtung aus Figur 3;
- Figur 8 einen Teil des Schließmechanismus der nicht-erfindungsgemäßen Vorrichtung aus Figur 3 mit geöffneter Klappe;
- Figur 9 einen Teil des Schließmechanismus der nicht-erfindungsgemäßen Vorrichtung aus Figur 3 mit geschlossener Klappe;
- Figur 10 eine Draufsicht auf die nicht-erfindungsgemäßen Vorrichtungen aus Figur 3;
- Figur 11 einen Bereich eines Flughafen-Terminals mit herkömmlichen Check-in-Schaltern und Self-Service-Schaltern mit integrierten erfindungsgemäßen Vorrichtungen zur Gepäckaufgabe;
- Figur 12 einen Teil einer nicht-erfindungsgemäßen Vorrichtung zur Gepäckaufgabe nach einer zweiten Ausführungsform bei geöffneter Abdeckung;
- Figur 13 die Vorrichtung aus Figur 12 bei geschlossener Abdeckung im Entladezustand;
- Figur 14 zwei in einen Self-Service-Schalter integrierte nichterfindungsgemäße Vorrichtungen nach einer zweiten Ausführungsform;
- Figur 15 zwei in einen Self-Service-Schalter integrierte nichterfindungsgemäße Vorrichtungen nach der zweiten Ausführungsform mit Verkleidung;
- Figur 16 einen Teil einer nicht-erfindungsgemäßen Vorrichtung zur Gepäckaufgabe nach einer dritten Ausführungsform bei geöffneter Abdeckung;
- Figur 17 die Vorrichtung aus Figur 16 bei geschlossener Abdeckung;
- Figur 18 die Vorrichtung aus Figur 16 bei geschlossener Abdeckung im Entladezustand;
- Figur 19 zwei in einen Self-Service-Schalter integrierte nichterfindungsgemäße Vorrichtungen nach der dritten Ausführungsform;
- Figur 20 einen Teil einer erfindungsgemäßen Vorrichtung zur Gepäckaufgabe nach einer vierten Ausführungsform bei geöffneter Abdeckung;
- Figur 21 die Vorrichtung aus Figur 20 bei geschlossener Abdeckung;
- Figur 22 die Vorrichtung aus Figur 20 bei geschlossener Abdeckung im Entladezustand;
- Figur 23 einen Teil einer nicht-erfindungsgemäßen Vorrichtung zur Gepäckaufgabe nach einer fünften Ausführungsform bei geschlossener Abdeckung;
- Figur 24 die Vorrichtung aus Figur 23 bei geöffneter Abdeckung; und
- Figur 25 die Vorrichtung aus Figur 23 bei geschlossener Abdeckung im Entladezustand.

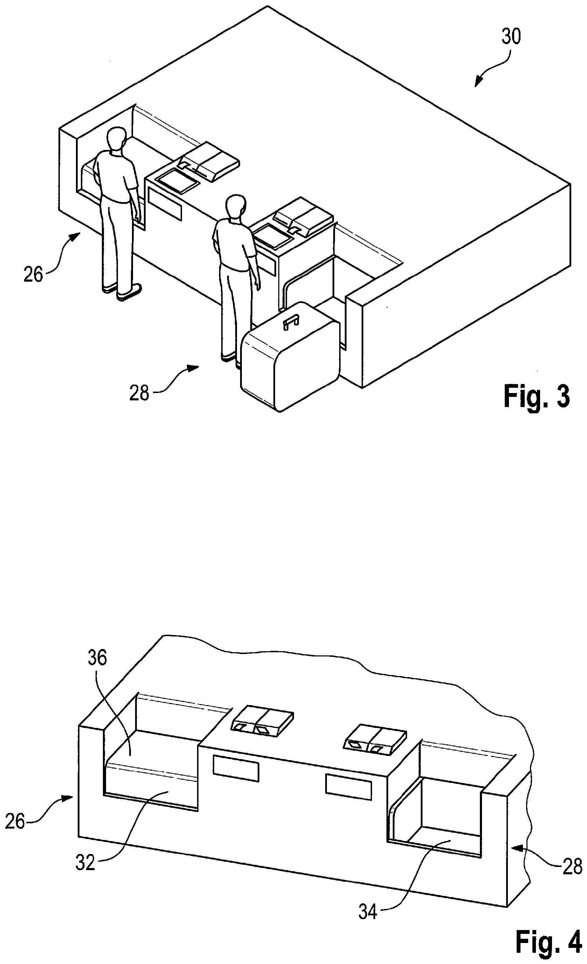

In den Figuren 3 und 4 sind in einer ersten Ausführungsform zwei Vorrichtungen 26, 28 zur automatisierten Aufgabe von Gepäckstücken von Passagieren gezeigt, die in einen Self-Service-Schalter 30 an einem Flughafen integriert sind. Es wird bezüglich des Schalters 30 nur auf diejenigen Check-in-Funktionalitäten eingegangen, die für die tatsächliche Gepäckaufgabe von Belang sind.

Jede Vorrichtung 26, 28 umfasst einen Behälter 32 bzw. 34 zur Aufnahme eines einzelnen Gepäckstücks. Des Weiteren ist eine Wiegeeinrichtung zur Erfassung des Gewichts eines in den Behälter 32, 34 gestellten Gepäckstücks vorgesehen.

Jedem Behälter 32, 34 ist eine separate, nicht mit dem Behälter 32, 34 verbundene Abdeckung 36 zugeordnet. Die Abdeckung 36 ist also nicht Bestandteil des Behälters 32, 34, sondern des Schalters 30 oder allgemein der Struktur, die die jeweilige Vorrichtung 26, 28 umgibt. Die Abdeckung 36 kann automatisch geöffnet und geschlossen werden. Nur im geöffneten Zustand ist der Zugang zum Innenraum des Behälters 32, 34 freigegeben, sodass ein Gepäckstück eines Passagiers aufgenommen werden kann. Im geschlossenen Zustand ist dem Passagier der Zugang hingegen verwehrt.

Im dargestellten Ausführungsbeispiel befindet sich die Abdeckung 36 der linken Vorrichtung 26 in der geschlossenen Stellung, sodass der Innenraum des Behälters 32 für den Passagier nicht zugänglich ist. Bei der rechten Vorrichtung 28 hat sich die Abdeckung nach links wegbewegt (in den Schalter 30 hinein), sodass der Passagier sein Gepäckstück in den Behälter 34 hineinstellen kann.

Die Abmessungen des Innenraums der Behälter 32, 34 entspricht genau den zulässigen Maßen des Gepäckfördersystems. Das bedeutet, dass Gepäckstücke, die die zulässigen Maße überschreiten, entweder gar nicht in den Behälter 32, 34 gestellt werden können, oder die Abdeckung 36 kann in diesem Fall nicht geschlossen werden.

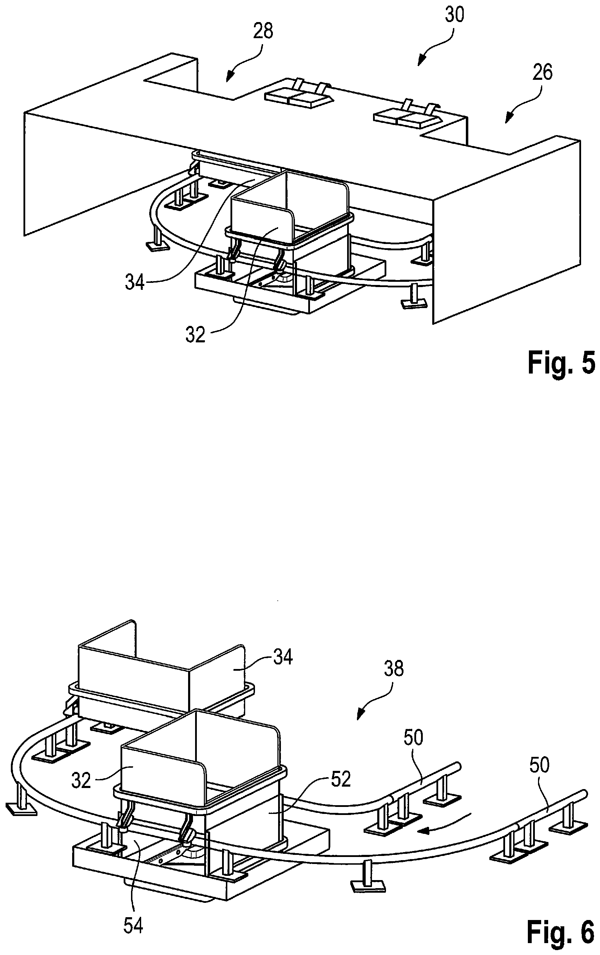

Die Figur 5 zeigt die Rückseite des Schalters 30 mit den beiden integrierten Gepäckaufgabevorrichtungen 26, 28. Mittels eines Transportsystems 38, das in Figur 6 noch einmal separat dargestellt ist, können beide Behälter 32, 34 automatisch von einer Beladeposition in eine Entladeposition bewegt werden.

Beim dargestellten Ausführungsbeispiel befindet sich der Behälter 34 der rechten Vorrichtung 28 (bezogen auf die Vorderansicht der Figuren 3 und 4) in der Beladeposition im Schalter 30, in der der Innenraum des Behälters 34 bei geöffneter Abdeckung 36 für einen Passagier zugänglich ist. Der Behälter 32 der linken Vorrichtung 28 wurde in die Entladeposition bewegt, in der der Passagier keinen Zugriff auf den Behälter 32 hat. Der Schalter 30 mit den beiden Vorrichtungen 26, 28 und das Transportsystem 38 sind hier so ausgelegt, dass die Entladeposition für beide Behälter 32, 34 dieselbe ist.

Das Transportsystem 38 umfasst für jeden Behälter 32, 34 eine Antriebseinrichtung, eine Führungseinrichtung und eine (gemeinsame) Steuereinrichtung. Jede Antriebseinrichtung weist ein Kraftübertragungselement auf, hier in Form einer Schleppkette 40 bzw. 42, die von einem Antrieb 44 bzw. 46 angetrieben wird. Über einen Mitnehmer 48 ist der Behälter 32, 34, der selbst über keinen eigenen Antrieb verfügt, an die Schleppkette 40, 42 gekoppelt. Die Führungseinrichtung weist zwei parallele Schienen 50 auf, in die beide Behälter 32, 34 eingehängt sind. Die Schienen 50 führen von den beiden Beladepositionen zur gemeinsamen Entladeposition. Die Steuereinrichtung ist so ausgelegt, dass immer nur ein Behälter 32, 34 zur Entladeposition bewegt werden kann.

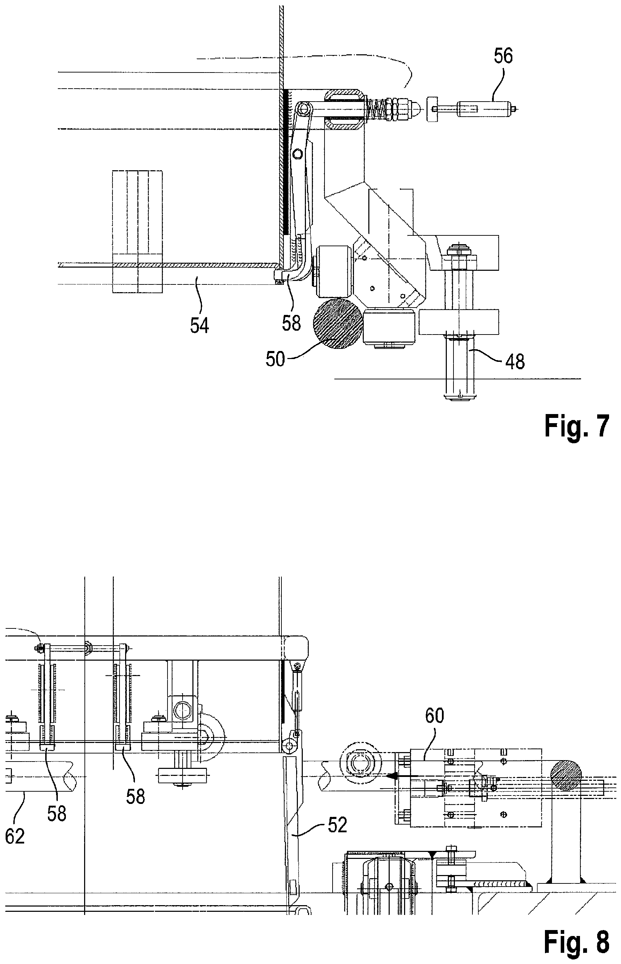

Die Behälter 32, 34 haben einen Boden, der geöffnet werden kann. Beim dargestellten Ausführungsbeispiel ist der Boden in zwei Klappen 52, 54 geteilt, die normalerweise mechanisch verriegelt sind. In der Entladeposition können beide Klappen 52, 54 von außen durch einen in Figur 7 im Detail dargestellten Entriegelungsmechanismus entriegelt werden, sodass beide Klappen 52, 54 gleichzeitig nach unten schwenken.

Der Entriegelungsmechanismus beinhaltet einen Aktuator 56, der als linearer Stellantrieb mit geringem Stellweg ausgebildet sein kann. Der Aktuator 56 ist so im Bereich der Entladeposition angeordnet, dass er auf einen am Behälter 32, 34 angebrachten Hebel- oder Gelenkmechanismus einwirken kann, wenn sich der Behälter 32, 34 in der Entladeposition befindet.

Beim dargestellten Ausführungsbeispiel ist der Aktuator 56 an einer der kurzen Behälterseiten angeordnet, wo sich die Klappen 52, 54 im verriegelten Zustand gegenüberliegen. Ein Aktivieren (Ausfahren) des Aktuators 56 bewirkt, dass zwei Verriegelungshebel 58, die die Klappen 52, 54 in der geschlossenen Position halten, in eine Freigabestellung geschwenkt werden, sodass die Klappen 52, 54 selbsttätig nach unten schwenken können.

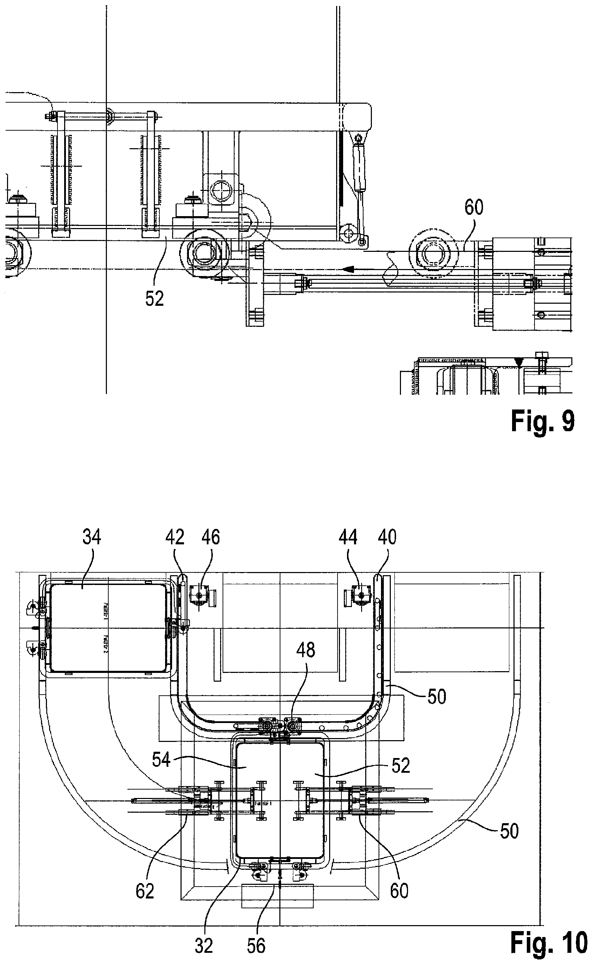

Zum Schließen des Bodens, genauer gesagt zum Hochschwenken der beiden Klappen 52, 54, ist ein Schließmechanismus mit zwei linearen Stellantrieben 60, 62 vorgesehen, wie in den Figuren 8 und 9 gezeigt. Die Stellantriebe 60, 62 sind an den langen Behälterseiten so angeordnet, dass die ausfahrenden Stellglieder der Stellantriebe 60, 62 jeweils eine Klappe 52, 54 mitnehmen, bis diese wieder mechanisch verriegelt sind. Hierzu muss der Aktuator 56 deaktiviert (eingefahren) sein.

Der Aktuator 56 und die linearen Stellantriebe 60, 62 werden von der derselben übergeordneten Steuereinrichtung gesteuert, die auch die Antriebe 44, 46 des Transportsystems steuert.

In Figur 10 sind die Beladepositionen und die Entladeposition der Behälter 32, 34, das Transportsystem sowie der Entriegelungsmechanismus mit dem Aktuator 56 und der Schließmechanismus mit den beiden linearen Stellantrieben 60, 62 in Draufsicht gezeigt.

Unterhalb der Entladeposition kann ein Transportbehälter der Gepäckförderanlage platziert werden. Diese Prozessstelle entspricht der Stelle der Beladung der Transportbehälter 14 der in den Figuren 1 und 2 dargestellten Förderbandsysteme 10.

Nachfolgend wird ein typischer Gepäckaufgabeprozess an einem Flughafen unter Verwendung der in den Self-Service-Schalter 30 integrierten Gepäckaufgabevorrichtungen 26, 28 beschrieben.

Der Passagier, der ein mit einem Gepäckanhänger versehenes Gepäckstück aufgeben möchte, meldet an einem Terminal des Schalters 30 das Gepäckstück an. Hierzu kann das Auslesen der Bordkarte oder eines anderen persönlichen Dokuments des Passagiers vorgesehen sein.

Wenn die dem Terminal zugeordnete Gepäckaufgabevorrichtung 28 betriebsbereit ist und sich der Behälter 34 in der Beladeposition befindet, öffnet sich die Abdeckung 36. Der Passagier stellt sein Gepäckstück in den Behälter 34. Wenn das Gepäckstück nicht in den Innenraum des Behälters 34 passt, merkt dies der Passagier sicherlich, bzw. es wird die Annahme verweigert und gegebenenfalls ein Hinweis auf die Sperrgepäckaufgabe ausgegeben. Gleiches gilt, wenn die Wiegeeinrichtung vor oder nach dem Schließen der Abdeckung 36 feststellt, dass das Gepäckstück nicht der aktuellen Gewichtsvorgabe entspricht. Vor oder nach dem Schließen der Abdeckung 36 wird der Gepäckanhänger elektronisch erfasst, und die relevanten Daten werden dem Check-in-System der Fluggesellschaft mitgeteilt.

Nach positiver Prüfung erhält der Passagier den Gepäckbeleg für das Gepäckstück, und der Behälter 34 mit dem Gepäckstück wird bei geschlossener Abdeckung 36 automatisch in einen Entladezustand überführt. Bei dieser Ausführungsform der Vorrichtung 28 bedeutet dies, dass der Behälter 34 automatisch von der Beladeposition in die Entladeposition bewegt wird. Dort wird der Boden des Behälters 34 mithilfe des Entriegelungsmechanismus geöffnet, sodass das Gepäckstück automatisch nach unten in einen Transportbehälter der Gepäckförderanlage übergeben wird. Bei diesem Umladen wird das Gepäckstück nicht gedreht, gekippt oder in sonstiger Weise umpositioniert oder über Förderbänder bewegt. Dies ist auch nicht erforderlich, da die Maße des Behälters 34 und dessen Ausrichtung in der Entladeposition nur eine Gepäckförderanlagenkonforme Positionierung des Gepäckstücks zulassen.

Anschließend wird der Boden mithilfe der Schließvorrichtung wieder geschlossen, und der Behälter 34 wird automatisch zurück in die Beladeposition transportiert. Sobald der Behälter 34 die Beladeposition erreicht hat, ist die Vorrichtung 28 bereit zur Annahme eines weiteren Gepäckstücks.

Der gleiche Prozess kann mit der anderen Vorrichtung 26 durchgeführt werden, wobei der Behälter 32 dieselben Kriterien erfüllt wie der Behälter 34.

Wie bereits erwähnt stellt die Steuereinrichtung sicher, dass nur einer der beiden Behälter 32, 34 zur Entladeposition bewegt wird. Unabhängig davon kann aber immer dann, wenn sich ein Behälter 32, 34 in der Beladeposition befindet, ein Gepäckstück von diesem Behälter 32, 34 angenommen werden. Mit dem Transport zur Entladeposition wird gegebenenfalls solange gewartet, bis diese frei ist, d. h. nicht mehr vom anderen Behälter besetzt ist. Der Behälter dient in diesem Fall als eine Art Schließfach, in dem das Gepäckstück zwischengelagert und auf Abruf zur Entladeposition befördert wird.

Grundsätzlich sind auch andere Prozessvarianten bezüglich der Anmeldung des Gepäckstücks möglich, was für den hier interessierenden Prozess der Gepäckaufgabe aber nicht von Bedeutung ist.

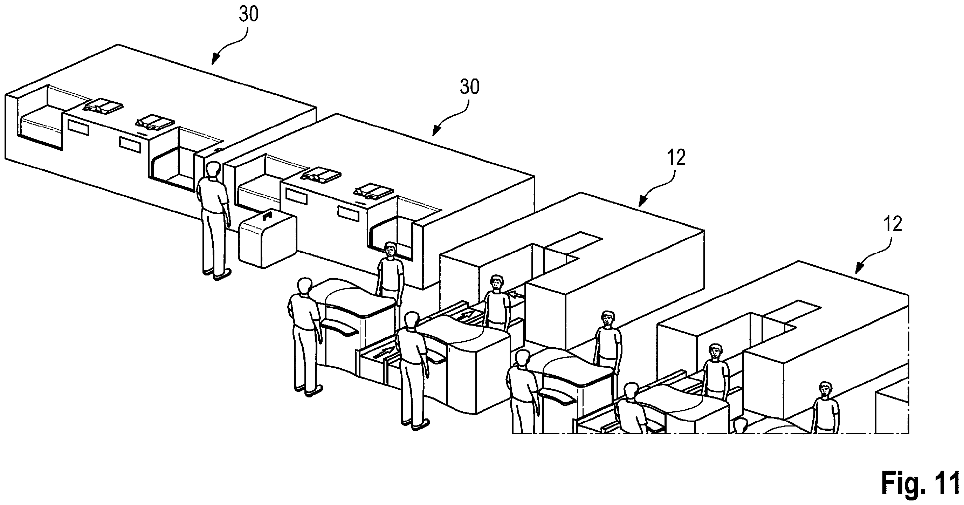

Wie aus Figur 11 hervorgeht, benötigt ein Schalter 30 mit den beschriebenen Gepäckaufgabevorrichtungen 26, 28 bei gleicher Funktionalität deutlich weniger Platz als ein herkömmlicher Check-in-Schalter 12, auch wenn ein solcher ohne Personal in einem Self-Service-Modus betrieben wird.

Gemäß der in den Figuren 3 bis 10 beispielhaft gezeigten ersten Ausführungsform benötigt ein Schalter 30 mit zwei integrierten Gepäckaufgabevorrichtungen 26, 28 in Summe nur zwei Antriebe 44, 46, einen Aktuator 56 und zwei Stellantriebe 60, 62. Ein herkömmlicher Doppel-Check-in-Schalter mit zwei Förderbandsystemen benötigt bei gleicher Funktionalität in Summe 14 Antriebe.

Nachfolgend werden weitere Ausführungsformen der Vorrichtung zur Aufgabe von Gepäckstücken beschrieben, wobei vornehmlich nur auf die Unterschiede zur ersten Ausführungsform eingegangen wird.

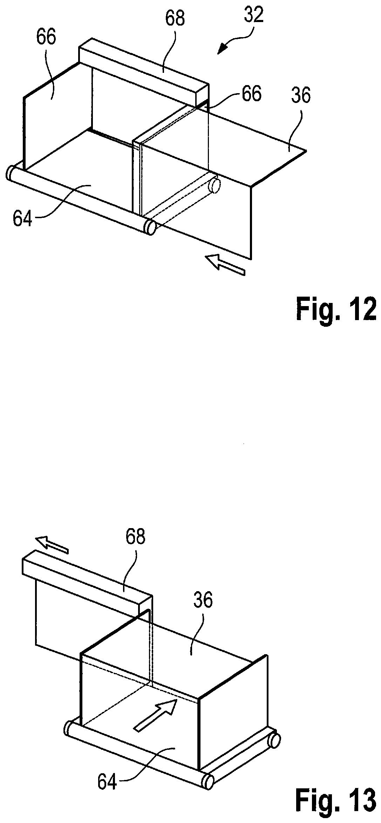

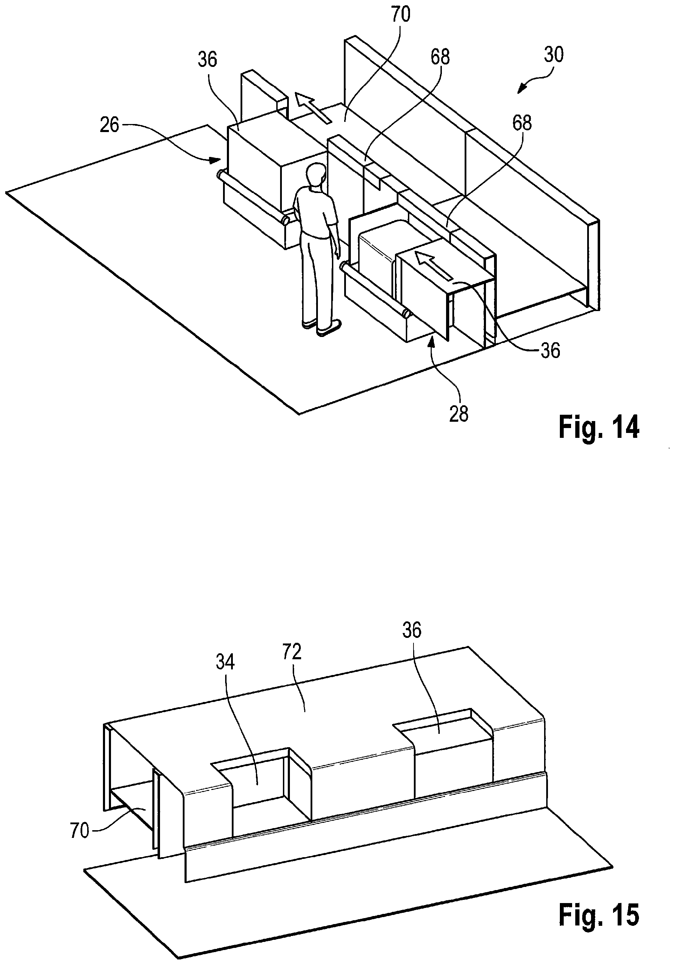

Die Figuren 12 bis 15 zeigen eine zweite Ausführungsform der Gepäckaufgabevorrichtung, bei der der Behälter 32 im Wesentlichen von einem unteren Bandförderer 64, zwei seitlichen Begrenzungsteilen 66, einer separaten Abdeckung 36 sowie einer separaten Schleusentür 68 begrenzt ist. Die Schleusentür 68 kann Teil eines Schalters sein, wie in Figur 14 zu erkennen ist.

In den in Figur 14 gezeigten Flughafen-Self-Service-Schalter 30 sind zwei Vorrichtungen 26, 28 zur Gepäckaufgabe integriert. Die Behälter 32, 34 der Vorrichtungen 26, 28 sind so angeordnet, dass die Abdeckung 36 dem Passagier zugewandt und die Schleusentür 68 vom Passagier abgewandt ist. Der Bandförderer 64 befindet sich unten. In Figur 14 ist bei der linken Vorrichtung 26 die Abdeckung 36 geschlossen und die Schleusentür 68 geöffnet, bei der rechten Vorrichtung 28 ist die Abdeckung 36 geöffnet und die Schleusentür 68 geschlossen.

Die Behälter 32, 34 bilden zusammen mit den separaten Abdeckungen 36 und den separaten Schleusentüren 68 jeweils eine geschlossene Einheit, deren Innenraum-Abmessungen den zulässigen Maßen des Gepäckstückes für die Gepäckförderanlage entsprechen. Wie bei der ersten Ausführungsform ist bei jeder Vorrichtung 26, 28 eine Wiegeeinrichtung zur Gewichtserfassung eines in den Behälter 32, 34 gestellten Gepäckstücks vorgesehen.

Im Folgenden wird nur auf die Vorrichtung 26 eingegangen, wobei die Ausführungen genauso für die andere Vorrichtung 28 gelten.

Das Beladen des Behälters 32, insbesondere das Öffnen und Schließen der Abdeckung 36, erfolgt in der gleichen Weise und unter den gleichen Voraussetzungen wie bei der ersten Ausführungsform, d. h. es kann nur ein Gepäckstück mit zulässigen Maßen eingestellt werden, und das Gewicht des Gepäckstücks wird vor und nach dem Schließen der Abdeckung 36 geprüft.

Nach erfolgreicher Prüfung wird der Behälter 32 in den Entladezustand überführt, wobei im Gegensatz zur ersten Ausführungsform hier der Behälter 32 nicht in eine Entladeposition bewegt wird. Stattdessen sorgt die Steuereinrichtung dafür, dass sich die Schleusentür 68 automatisch öffnet und auf der vom Passagier abgewandten Seite des Behälters 32 den Zugang zu einem Förderband oder einem anderen Transportsystem der Gepäckförderanlage freigibt. Der untere Bandförderer 64 wird von der Steuereinrichtung aktiviert und fördert das Gepäckstück ab. Das Gepäckstück kann beispielsweise an eine Bandanlage (Takeawayband) oder auch an ein anderes gängiges Transportsystem übergeben werden.

Wie in Figur 14 gezeigt können mehrere Vorrichtungen 26, 28 vorteilhaft und platzsparend nebeneinander an einem Sammelband 70 der Gepäckförderanlage angeordnet werden. Grundsätzlich können die Behälter aller Vorrichtungen 26, 28 unabhängig voneinander in den Entladezustand überführt werden, solange sichergestellt ist, dass es nicht zu einer Kollision von Gepäckstücken auf einem nachfolgenden Transportsystem kommt.

Figur 15 zeigt einen Self-Service-Schalter 30 mit zwei Vorrichtungen 26, 28, die ebenso wie das Sammelband 70 mit einer Verkleidung 72 versehen sind.

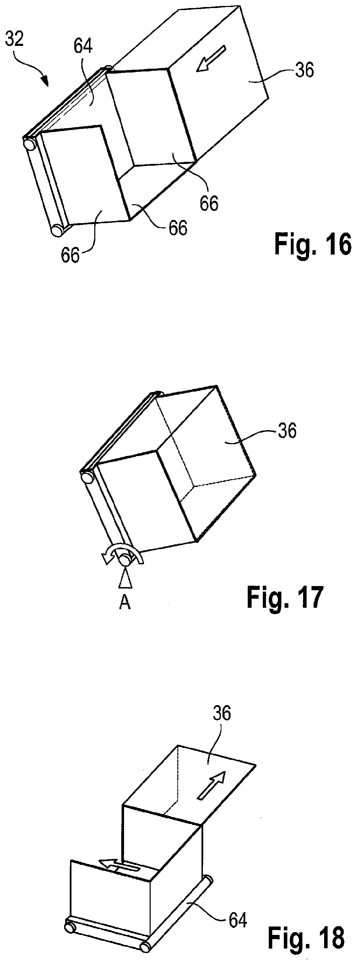

In den Figuren 16 bis 19 ist eine dritte Ausführungsform dargestellt, die der zweiten Ausführungsform sehr ähnlich ist. Es wird der Einfachheit halber wiederum nur auf eine der Vorrichtungen 26, 28 eingegangen.

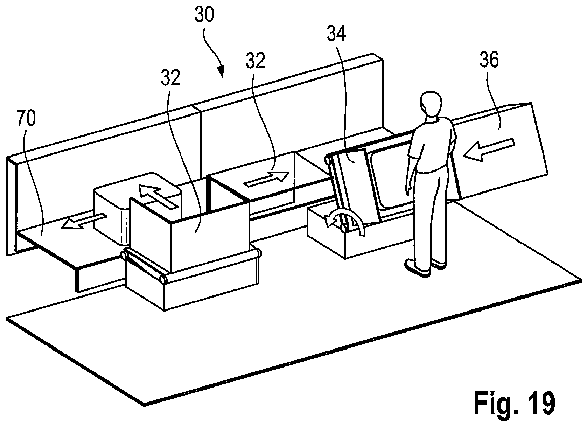

Der Behälter 32 hat hier drei Begrenzungsteile 66 und einen Bandförderer 64, die den Innenraum begrenzen. Die beiden übrigen Seiten des Behälters 32 sind durch die Abdeckung 36 verschließbar. In der Beladeposition befindet sich der Behälter 32 in einer Schräglage, wie sie in den Figuren 16 und bei der rechten Vorrichtung 28 in Figur 19 gezeigt ist. Bei geöffneter Abdeckung 36 kann ein Gepäckstück mit zulässigen Maßen somit schräg in den Behälter 32 gestellt werden, genauer gesagt auf das in dieser Lage untere Begrenzungsteil 66 und den Bandförderer 64, ohne dass der Passagier dabei Zugang zu dem von ihm abgewandten Bereich der Vorrichtung 26 hat.

Nach dem Schließen der Abdeckung 36 befindet sich das Gepäckstück in einer geschlossenen Einheit. Nach erfolgreicher Gewichtsprüfung wird der Behälter 32 bei geschlossener Abdeckung 36 in den Entladezustand überführt. Dies erfolgt hier durch automatisches Kippen des Behälters 32 um die Achse A, die im Wesentlichen der gemeinsamen Kante des Bandförderers 64 und des unteren Begrenzungsteils 66 entspricht (siehe Figur 17), in eine Entladeposition.

In der Entladeposition befindet sich der Bandförderer 68 in einer waagerechten Position. Die Abdeckung 36 wird automatisch geöffnet, und der Bandförderer 64 übergibt das Gepäckstück an die Gepäckförderanlage, wie in Figur 18 und bei der linken Vorrichtung 26 in Figur 19 gezeigt.

Die Schräglage des Behälters 32 und die entsprechende Kippbewegung in die Entladeposition sollten im Hinblick auf Bedienungsfreundlichkeit für den Passagier und Schutz des Gepäckstücks (Umfallen) entsprechend abgestimmt sein.

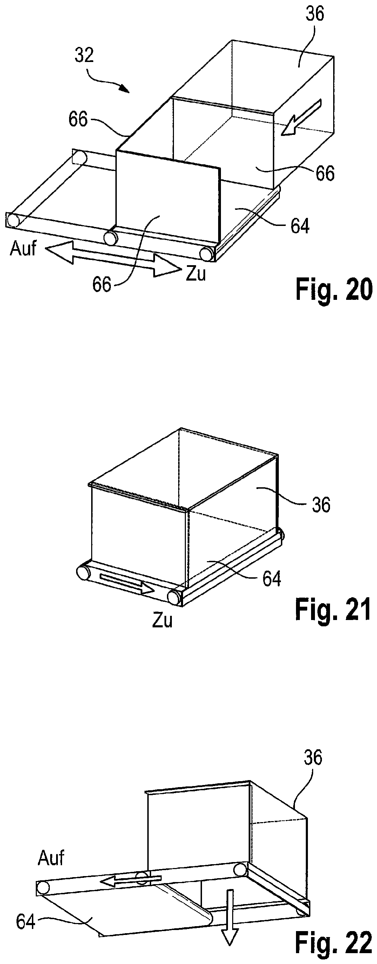

Eine vierte Ausführungsform der Vorrichtung zur Gepäckaufgabe ist in den Figuren 20 bis 22 dargestellt. Der Behälter 32 ist hier von drei Begrenzungsteilen 66 und einem Bandförderer 64 begrenzt, dessen Position veränderbar ist. Die übrigen Seiten des Behälters 32 können wie zuvor beschrieben durch eine Abdeckung 36 geschlossen werden.

In der Beladeposition (siehe Figur 20) ist die Abdeckung 36 geöffnet, und ein Passagier kann ein Gepäckstück auf den (waagerechten) Bandförderer 64 stellen, der den Boden des Behälters 32 bildet. Nach dem Schließen der Abdeckung 36 wird der Bandförderer 64 von seiner Ausgangsposition in eine Entladeposition wegbewegt (siehe Figur 22). Währenddessen fördert der Bandförderer 64 das Gepäckstück in die entgegengesetzte Richtung, sodass das Gepäckstück durch den sich öffnenden Boden des Behälters 32 nach unten fallen bzw. von einem dort platzierten Transportbehälter oder auf andere Weise von einem Transportsystem der Gepäckförderanlage aufgenommen werden kann.

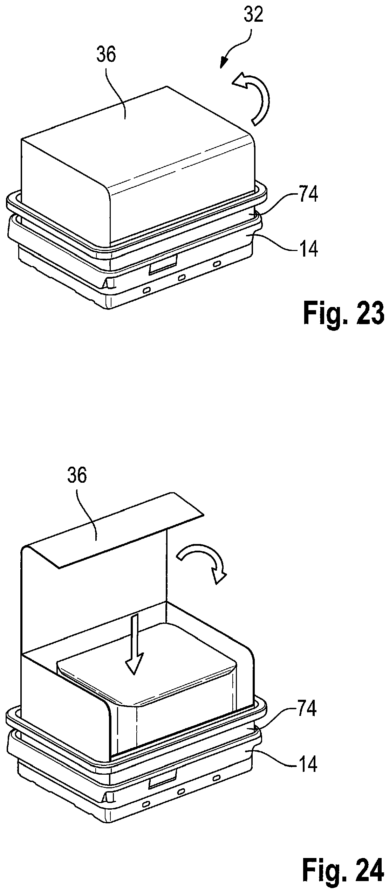

Bei der in den Figuren 23 bis 25 gezeigten fünften bevorzugten Ausführungsform der Gepäckaufgabevorrichtung weist der Behälter 32 eine Abdeckung 36 in Form eines Behälterdeckels, einen Mittelteil 74 und einen Boden auf. Die Besonderheit ist hier, dass wenigstens der Boden des Behälters 32 durch einen Transportbehälter 14 der übernehmenden Gepäckförderanlage gebildet ist. Der Transportbehälter 14 kann sogar einen wesentlichen Teil des Behälters 32 der Gepäckaufgabevorrichtung ausmachen. Eine Falltür oder dergleichen oberhalb des Bodens ist hier nicht vorgesehen.

Wie in Figur 24 gezeigt wird die Abdeckung 36 wie bei den zuvor beschriebenen Ausführungsformen geöffnet, damit ein Passagier sein Gepäckstück in den Behälter 32 einstellen kann. Dabei kommt das Gepäckstück direkt auf dem Transportbehälter 14 zu liegen, der zugleich den Boden des Behälters 32 bildet. Die Form und die Maße des Innenraums sowie die Ausrichtung des Behälters 32 sorgen dafür, dass das Gepäckstück in einer vorbestimmten Lage in dem Transportbehälter 14 zu liegen kommt. Nach dem Einstellen des Gepäckstücks wird die Abdeckung 36 wieder geschlossen, sodass das Gepäckstück vor unbefugtem Zugriff geschützt ist.

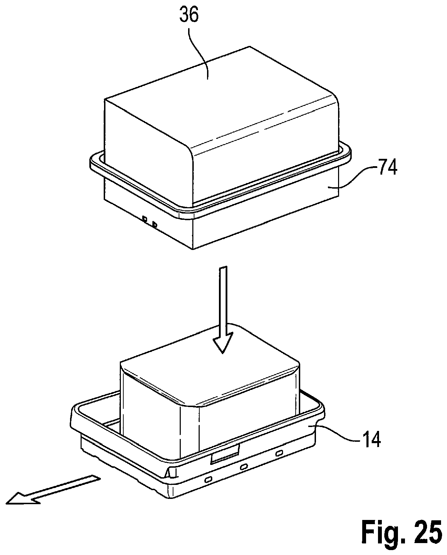

Bei geschlossener Abdeckung 36 wird der Behälter 32 durch eine vertikale Abwärtsbewegung des Transportbehälters 14 entleert, wie in Figur 25 gezeigt. Der Transportbehälter 14 mit dem optimal darin positionierten Gepäckstück wird dann abgefördert. Die Abdeckung 36 wird erst dann wieder für die nächste Beladung geöffnet, wenn der Boden des Behälters 32 durch einen neuen Transportbehälter 14 geschlossen ist.

Der Transportbehälter 14 erfüllt hier die Funktion einer Schleusentür, die ein manipulationssicheres Entladen des Gepäckstücks gewährleistet. Bei dieser Ausführungsform ist es nicht zwingend erforderlich, den Behälter 32 aus der Beladeposition wegzubewegen, da die Schleusenfunktion hier durch das Wegbefördern des Transportbehälters 14 erfüllt wird.

Anstelle des Transportbehälters 14 kann auch ein anderes geeignetes Förderelement der übernehmenden Gepäckförderanlage vorgesehen sein.

Auch die vierte und die fünfte Ausführungsform der Gepäckaufgabevorrichtung können in mehrfacher Ausfertigung in einen oder mehrere Schalter integriert werden.

Allen Ausführungsformen ist gemeinsam, dass die Abmessungen des Innenraums im geschlossenen Zustand des Behälters 32 bzw. 34 den maximalen zulässigen Maßen eines Gepäckstücks entsprechen, wie es von der Gepäckförderanlage noch transportiert werden kann. Bei allen Ausführungsformen ist eine optionale Gewichtskontrolle vor dem Schließen der Abdeckung 36 und eine endgültige, verbindliche Gewichtskontrolle nach dem Schließen der Abdeckung 36 vorgesehen. Ebenso können bei allen Ausführungsformen weitere Kontrollmaßnahmen (Erkennung von Kleinkindern oder Tieren etc.) und weitere Funktionen (Erfassen eines Gepäckanhängers etc.) vorgesehen sein.

Alle automatischen Vorgänge der Vorrichtung 26 bzw. 28, insbesondere das Überführen des Behälters 32 bzw. 34 in den Entladezustand, werden von der Steuereinrichtung initiiert und überwacht.

Selbstverständlich ist es möglich, bestimmte Merkmale der beschriebenen Ausführungsformen in geeigneter Weise miteinander zu kombinieren. Beispielsweise ist eine Ausführungsform möglich, bei der eine Falltür vorgesehen ist, der Behälter 32 aber zum Entladen aber nicht in eine Entladeposition bewegt wird.

Allgemein kann die Gepäckaufgabevorrichtung 26, 28 auch bei der Aufgabe von Gepäck für Schiffsreisen oder anderen Reisearten eingesetzt werden.

### Bezuaszeichenliste

- 10: Förderbandsystem
- 12: Check-in-Schalter
- 14: Transportbehälter
- 16: Wiegeband
- 18: Labelband
- 20: Zufuhrband
- 22a: Ausrichtband
- 22b: Takeawayband
- 24: Verladeband
- 26: linke Gepäckaufgabevorrichtung
- 28: rechte Gepäckaufgabevorrichtung
- 30: Self-Service-Schalter
- 32: Behälter der linken Gepäckaufgabevorrichtung
- 34: Behälter der rechten Gepäckaufgabevorrichtung
- 36: Abdeckung
- 38: Transportsystem
- 40: Schleppkette der linken Gepäckaufgabevorrichtung
- 42: Schleppkette der rechten Gepäckaufgabevorrichtung
- 44: Antrieb der linken Gepäckaufgabevorrichtung
- 46: Antrieb der rechten Gepäckaufgabevorrichtung
- 48: Mitnehmer
- 50: Schiene
- 52: Klappe
- 54: Klappe
- 56: Aktuator
- 58: Verriegelungshebel
- 60: Stellantrieb für Klappe 52
- 62: Stellantrieb für Klappe 54
- 64: Bandförderer
- 66: Begrenzungsteil
- 68: Schleusentür
- 70: Sammelband
- 72: Verkleidung
- 74: Mittelteil

## Patentansprüche

1. Vorrichtung (26, 28) zur Aufgabe von Gepäckstücken von Passagieren, insbesondere zur Verwendung an einem Flughafen, mit
einem Behälter (32, 34) zur Aufnahme eines Gepäckstücks, und
einer separaten Abdeckung (36),
wobei in einer für einen Passagier zugänglichen Beladeposition des Behälters (32, 34) die Abdeckung (36) aus einer geöffneten Stellung, die den Zugang zum Innenraum des Behälters (32, 34) freigibt, in eine geschlossene Stellung überführbar ist, in der der Zugang zum Innenraum des Behälters (32, 34) blockiert ist,
wobei der Behälter (32, 34) bei geschlossener Abdeckung (36) in einen Entladezustand überführbar ist, in dem das Gepäckstück automatisch und für den Passagier unzugänglich aus dem Behälter (32, 34) entladen werden kann,
wobei der Behälter (32) von drei Begrenzungsteilen (66) und einem Bandförderer (64) begrenzt ist, der in einer Ausgangsposition den Boden des Behälters (32, 34) bildet und dessen Position veränderbar ist, und die übrigen Seiten des Behälters (32) durch die Abdeckung (36) geschlossen werden können, und
wobei der Bandförderer (64) zum Überführen des Behälters (32, 34) in den Entladezustand bei geschlossener Abdeckung (36) in eine Entladeposition bewegt wird,
**dadurch gekennzeichnet, dass** der Bandförderer (64) so in die Entladeposition bewegt wird, dass sich dadurch der Boden des Behälters (32, 34) öffnet, während der Bandförderer (64) das Gepäckstück in die entgegengesetzte Richtung fördert, sodass das Gepäckstück durch den sich öffnenden Boden nach unten fällt oder von einem unten platzierten Transportbehälter aufgenommen wird.

2. Vorrichtung (26, 28) nach Anspruch 1, **dadurch gekennzeichnet, dass** der Behälter (32, 34) einen Innenraum hat, dessen Form und Maße auf Vorgaben einer Gepäckförderanlage, an die ein im Behälter (32, 34) befindliches Gepäckstück übergeben werden soll, abgestimmt sind.

3. Vorrichtung (26, 28) nach Anspruch 1 oder 2, **dadurch gekennzeichnet, dass** der Behälter (32, 34) so geformt ist und/oder im Entladezustand so positioniert ist, dass das Gepäckstück im Entladezustand in einer vorbestimmten Lage und/oder Ausrichtung und/oder Orientierung an eine Gepäckförderanlage übergeben wird.

4. Vorrichtung (26, 28) nach einem der vorhergehenden Ansprüche, **gekennzeichnet durch** eine Wiegeeinrichtung, die so eingerichtet ist, dass sie das Gewicht eines Gepäckstücks im Behälter (32, 34) erfasst, wenn sich die Abdeckung in der geschlossenen Stellung befindet, und vorzugsweise auch zuvor, wenn sich die Abdeckung (36) noch in der geöffneten Stellung befindet.

5. Vorrichtung (26, 28) nach einem der vorhergehenden Ansprüche, **gekennzeichnet durch** eine Steuereinrichtung, die das Öffnen und Schließen der Abdeckung (36), und vorzugsweise alle weiteren Vorgänge beim Überführen des Behälters (32, 34) in den Entladezustand, in Abhängigkeit von vorgegebenen Parametern steuert.

6. Gepäckaufgabeschalter, insbesondere Self-Service-Schalter (30), mit wenigstens zwei integrierten Vorrichtungen (26, 28) nach einem der vorhergehenden Ansprüche, wobei beide Behälter (32, 34) der Vorrichtungen (26, 28) in dieselbe gemeinsame Entladeposition bewegbar sind, und dass der Gepäckaufgabeschalter vorzugsweise eine Steuereinrichtung umfasst, die sicherstellt, dass immer nur einer der Behälter (32, 34) zur Entladeposition bewegt wird.

7. Verfahren zur Aufgabe eines Gepäckstücks eines Passagiers, insbesondere an einem Flughafen, unter Verwendung einer Vorrichtung (26, 28) nach einem der Ansprüche 1 bis 5, **gekennzeichnet durch** folgende Schritte:
- Öffnen der Abdeckung (36), um den Zugang zum Innenraum des Behälters (32, 34) für einen Passagier freizugeben;
- Aufnehmen des Gepäckstücks in dem Behälter (32, 34);
- Schließen der Abdeckung (36), um den Zugang zum Innenraum des Behälters (32, 34) zu blockieren; und
- Überführen des Behälters (32, 34) in einen Entladezustand, in dem das Gepäckstück automatisch und für den Passagier unzugänglich aus dem Behälter (32, 34) entladen wird, wobei der Bandförderer (64) bei geschlossener Abdeckung (36) so in eine Entladeposition bewegt wird, dass sich dadurch der Boden des Behälters (32, 34) öffnet, während der Bandförderer (64) das Gepäckstück in die entgegengesetzte Richtung fördert, sodass das Gepäckstück durch den sich öffnenden Boden nach unten fällt oder von einem unten platzierten Transportbehälter aufgenommen wird.

## Claims

1. A device (26, 28) for checking in pieces of baggage of passengers, in particular for use at an airport, comprising
a container (32, 34) for receiving a piece of baggage, and
a separate cover (36),
wherein in a loading position, accessible to a passenger, of the container (32, 34), the cover (36) is transferable from an open position, which unblocks access to the interior of the container (32, 34), to a closed position, in which access to the interior of the container (32, 34) is blocked,
wherein, when the cover (36) is closed, the container (32, 34) is transferable to an unloading condition, in which the piece of baggage can be automatically unloaded from the container (32, 34) in a manner inaccessible to the passenger,
wherein the container (32) is delimited by three delimiting parts (66) and a belt conveyor (64) which in an initial position forms the bottom of the container (32, 34) and the position of which can be varied, and the remaining sides of the container (32) can be closed by the cover (36), and
wherein the belt conveyor (64) is moved to an unloading position with the cover (36) closed, for transferring the container (32, 34) to the unloading condition,
**characterized in that** the belt conveyor (64) is moved to the unloading position such that this causes the bottom of the container (32, 34) to open while the belt conveyor (64) conveys the piece of baggage in the opposite direction, so that the piece of baggage falls downwards through the bottom that opens or is received by a transport container placed below.

2. The device (26, 28) according to claim 1, **characterized in that** the container (32, 34) has an interior the shape and dimensions of which are adapted to meet specifications of a baggage conveyor system to which a piece of baggage located in the container (32, 34) is to be delivered.

3. The device (26, 28) according to claim 1 or 2, **characterized in that** the container (32, 34) is shaped such that and/or in the unloading condition is positioned such that the piece of baggage when in the unloading condition is delivered to a baggage conveyor system in a predetermined position and/or alignment and/or orientation.

4. The device (26, 28) according to any of the preceding claims, **characterized by** a weighing equipment configured to detect the weight of a piece of baggage in the container (32, 34) when the cover is in the closed position, and preferably also before, when the cover (36) is still in the open position.

5. The device (26, 28) according to any of the preceding claims, **characterized by** a controller that controls the opening and closing of the cover (36) and preferably all further processes during the transfer of the container (32, 34) to the unloading condition as a function of predefined parameters.

6. A baggage check-in counter, in particular a self-service counter (30), comprising at least two integrated devices (26, 28) according to any of the preceding claims, wherein both containers (32, 34) of the devices (26, 28) are adapted to be moved to the same common unloading position, and that the baggage check-in counter preferably comprises a controller which ensures that only one of the containers (32, 34) is moved to the unloading position at a time.

7. A method of checking in a piece of baggage of a passenger, in particular at an airport, using a device (26, 28) according to any of claims 1 to 5, **characterized by** the following steps:
- opening the cover (36) to unblock access to the interior of the container (32, 34) for a passenger;
- receiving the piece of baggage in the container (32, 34);
- closing the cover (36) to block access to the interior of the container (32, 34); and
- transferring the container (32, 34) to an unloading condition, in which the piece of baggage is automatically unloaded from the container (32, 34) in a manner inaccessible to the passenger, wherein the belt conveyor (64), with the cover (36) closed, is moved to an unloading position such that this causes the bottom of the container (32, 34) to open, while the belt conveyor (64) conveys the piece of baggage in the opposite direction, so that the piece of baggage falls downwards through the bottom that opens or is received by a transport container placed below.

## Revendications

1. Dispositif (26, 28) pour l'enregistrement de bagages de passagers, en particulier pour l'utilisation dans un aéroport, comprenant
un bac (32, 34) pour la réception d'un bagage, et
un couvercle séparé (36),
le couvercle (36), dans une position de chargement du bac (32, 34), accessible à un passager, étant apte à être transféré d'une position ouverte qui permet l'accès à l'espace intérieur du bac (32, 34), dans une position fermée dans laquelle l'accès à l'espace intérieur du bac (32, 34) est bloqué,
le bac (32, 34), lorsque le couvercle (36) est fermé, étant apte à être transféré dans un état de déchargement dans lequel le bagage peut être déchargé du bac (32, 34) de manière automatique et non accessible au passager,
le bac (32) étant délimité par trois parties de délimitation (66) et une bande transporteuse (64) qui forme le fond du bac (32, 34) dans une position initiale et dont la position est modifiable, et les autres cotés du bac (32) étant aptes à être fermés par le couvercle (36), et
la bande transporteuse (64) étant déplacée dans une position de déchargement lorsque le couvercle (36) est fermé pour transférer le bac (32, 34) dans l'état de déchargement,
**caractérisé en ce que** la bande transporteuse (64) est déplacée dans la position de déchargement de telle sorte que le fond du bac (32, 34) est ainsi ouvert, pendant que la bande transporteuse (64) transporte le bagage dans le sens opposé, de sorte que le bagage tombe vers le bas à travers le fond qui s'ouvre ou est reçu par un bac de transport placé au-dessous.

2. Dispositif (26, 28) selon la revendication 1, **caractérisé en ce que** le bac (32, 34) présente un espace intérieur dont la forme et les dimensions sont accordées à des spécifications d'une installation de transport de bagages à laquelle un bagage se trouvant dans le bac (32, 34) doit être remis.

3. Dispositif (26, 28) selon la revendication 1 ou 2, **caractérisé en ce que** le bac (32, 34) est formé et/ou est positionné dans l'état de déchargement de telle sorte que le bagage, dans l'état de déchargement, est remis à une installation de transport de bagages dans une position prédéterminée et/ou un alignement prédéterminé et/ou une orientation prédéterminée.

4. Dispositif (26, 28) selon l'une des revendications précédentes, **caractérisé par** un moyen de pesage qui est aménagé de manière à saisir le poids d'un bagage dans le bac (32, 34) lorsque le couvercle se trouve dans la position fermée, et de préférence également avant, lorsque le couvercle (36) se trouve encore dans la position ouverte.

5. Dispositif (26, 28) selon l'une des revendications précédentes, **caractérisé par** un moyen de commande qui commande l'ouverture et la fermeture du couvercle (36), et de préférence tous les autres processus lors du transfert du bac (32, 34) dans l'état déchargement, en fonction de paramètres prédéterminés.

6. Guichet d'enregistrement de bagages, en particulier guichet self-service (30), comprenant au moins deux dispositifs (26, 28) intégrés selon l'une des revendications précédentes, les deux bacs (32, 34) des dispositifs (26, 28) étant aptes à être déplacés dans la même position de déchargement commune, et en ce que le guichet d'enregistrement de bagages comprend de préférence un moyen de commande qui assure qu'un seul des bacs (32, 34) à la fois est déplacé vers la position de déchargement.

7. Procédé d'enregistrement d'un bagage d'un passager, en particulier dans un aéroport, en utilisant un dispositif (26, 28) selon l'une des revendications 1 à 5, **caractérisé par** les étapes suivantes :
- ouverture du couvercle (36) pour permettre à un passager d'accéder à l'espace intérieur du bac (32, 34) ;
- réception du bagage dans le bac (32, 34) ;
- fermeture du couvercle (36) pour bloquer l'accès à l'espace intérieur du bac (32, 34) ; et
- transfert du bac (32, 34) dans un état de déchargement dans lequel le bagage est déchargé du bac (32, 34) de manière automatique et non accessible au passager, la bande transporteuse (64) étant déplacée dans la position de déchargement lorsque le couvercle (36) est fermé, de telle sorte que le fond du bac (32, 34) est ainsi ouvert, pendant que la bande transporteuse (64) transporte le bagage dans le sens opposé, de sorte que le bagage tombe vers le bas à travers le fond qui s'ouvre ou est reçu par un bac de transport placé au-dessous.
